# EUROPEAN PATENT APPLICATION

(11) **EP 4 834 559 A1**
(43) Date of publication of application: **04.11.2026**
(21) Application number: 24913006.3
(22) Date of filing: 26.12.2024
(51) Int. Cl.: B29C 39/40, B29C 33/42, B29C 39/02, B29C 39/26, G02B 1/04, G02B 3/00

(54) **OPTICAL RESIN WAFER MANUFACTURING METHOD**

(30) Priority: 27.12.2023 JP 2023221784; 27.12.2023 JP 2023221798
(71) Applicant: Mitsui Chemicals, Inc., Tokyo 104-0028 (JP)
(72) Inventor: KAMIO, Hiroyuki, Tokyo 104-0028 (JP); MURAMATSU, Akihiro, Tokyo 104-0028 (JP)
(74) Representative: Hoffmann Eitle
(86) International application number: PCT/JP2024/046152
(87) International publication number: WO 2025/143120

(57) **Abstract**

An object of the present invention is to provide an optical resin wafer manufacturing method for obtaining an optical resin wafer having improved planarity. The optical resin wafer having improved planarity can be obtained by an optical resin wafer manufacturing method, the method including a mold preparation step of preparing a mold satisfying the following (a) or the following (b), and a curing step of casting a curable composition serving as a raw material of the wafer into the mold and curing the curable composition to obtain an optical resin wafer precursor. (a) The mold includes one or more spacers in a central portion of a cavity space. (b) a relationship between a thickness tₘ₀ of the central portion of the cavity space of the mold and a thickness tₘ₁ of a point 5 mm from an outer peripheral portion of the cavity space of the mold toward the central portion is tₘ₀ > tₘ₁.

## Description

### TECHNICAL FIELD

The present invention relates to an optical resin wafer manufacturing method.

### BACKGROUND ART

In the field of optical devices, there is a demand for a resin material for reasons such as weight reduction and improvement of impact resistance.

Patent Document 1 discloses an optical member including an organic polymer, having an area of 1 mm² or more, and including a surface A in which a flatness of a region having an area of 1 mm² is 80 µm or less in a case where the flatness is measured with a non-contact optical flatness meter. In addition, Patent Document 1 describes that "an object of the present disclosure is to provide an optical member which is lightweight and capable of transmitting optical information with high accuracy, a method for manufacturing the optical member, and an optical information transmission device including the optical member".

### RELATED DOCUMENT

### PATENT DOCUMENTS

Patent Document 1: Pamphlet of International Publication No. WO 2020/170801

### SUMMARY OF THE INVENTION

### TECHNICAL PROBLEM

As a method for manufacturing an optical member using a resin material, a method for manufacturing the optical member by casting the resin material into a mold is known. However, in a case of molding using a mold, the optical resin wafer may have poor planarity due to curing shrinkage or the like in a case where the resin material is cured.

The present invention provides an optical resin wafer manufacturing method for obtaining an optical resin wafer having improved planarity.

### SOLUTION TO PROBLEM

According to the present invention, an optical resin wafer manufacturing method described below is provided.
1. An optical resin wafer manufacturing method, the method including a mold preparation step of preparing a mold satisfying the following (a) or (b), and a curing step of casting a curable composition serving as a raw material of an optical resin wafer into the mold and curing the curable composition to obtain an optical resin wafer precursor.
   (a) The mold includes one or more spacers in a central portion of a cavity space.
   (b) A relationship between a thickness tₘ₀ at the central portion of the cavity space of the mold and a thickness tₘ₁ at a point 5 mm from an outer peripheral portion of the cavity space of the mold toward the central portion satisfies tₘ₀ > tₘ₁.
2. The optical resin wafer manufacturing method according to 1., further including a processing step of performing, on the optical resin wafer precursor, at least one processing selected from the group consisting of notch processing, burr processing, beveling processing, cutting processing, grinding processing, polishing processing, and heat treatment to obtain the optical resin wafer.
3. The optical resin wafer manufacturing method according to 1. or 2., in which the mold satisfies the (a) and includes the one or more spacers within a range of 25 mm from an edge portion of the cavity space toward the central portion.
4. The optical resin wafer manufacturing method according to 3., in which the mold satisfies the (a), and the spacers are disposed to occupy 80% or more of an outer periphery of the cavity space.
5. The optical resin wafer manufacturing method according to any one of 1. to 4., in which the mold satisfies the (a), and a shape of the spacer is a cylindrical shape, a polygonal columnar shape, a cylindrical shape, or an rectangular tubular shape.
6. The optical resin wafer manufacturing method according to any one of 1. to 5., in which the mold satisfies the (a), and the spacer has a structure that allows the curable composition to be cast into the cavity space.
7. The optical resin wafer manufacturing method according to any one of 1. to 6., in which the mold satisfies the (a), and the spacer contains at least one selected from the group consisting of glass, ceramic, metal, and resin.
8. The optical resin wafer manufacturing method according to any one of 1. to 7., in which the mold contains glass.
**9.** The optical resin wafer manufacturing method according to any one of 1. to 8., in which the optical resin wafer contains at least one selected from the group consisting of a (thio)urethane-based optical resin, an epoxy-based optical resin, a polycarbonate-based optical resin, an episulfide-based optical resin, an allyl carbonate-based optical resin, a nylon-based optical resin, a polyamide-based optical resin, and a polyimide-based optical resin.
10. The optical resin wafer manufacturing method according to any one of 1. to **9.,** in which a refractive index of the optical resin wafer is 1.47 or more.
11. The optical resin wafer manufacturing method according to any one of 1. to 10., in which a curing shrinkage rate A of the curable composition, which is calculated by the following expression (x), is 15% or less. $A = \left({V}_{0}-{V}_{1}\right) / {V}_{0} \times 100$
   A: curing shrinkage rate [%]
   V₀: volume of the curable composition (before curing)
   V₁: volume of the optical resin wafer precursor (after curing)
12. The optical resin wafer manufacturing method according to any one of 1. to 11., in which an average thickness of the optical resin wafer is 0.1 mm or more and 3.0 mm or less.
13. The optical resin wafer manufacturing method according to any one of 1. to 12., in which a diameter of the optical resin wafer is 50 mm or more and 350 mm or less.
14. The optical resin wafer manufacturing method according to any one of 1. to 13., in which a flatness of the optical resin wafer is 350 µm or less.

### ADVANTAGEOUS EFFECTS OF INVENTION

According to the present invention, it is possible to provide an optical resin wafer manufacturing method for obtaining an optical resin wafer having improved planarity.

### BRIEF DESCRIPTION OF THE DRAWINGS

[FIG. 1] FIG. 1 includes a cross-sectional view (1A) and a top view (1B) schematically showing an example of a mold used in an optical resin wafer manufacturing method according to the present embodiment 1.
[FIG. 2] FIG. 2 includes a cross-sectional view (2A) and a top view (2B) schematically showing an example of a mold used in an optical resin wafer manufacturing method according to the present embodiment 1.
[FIG. 3] FIG. 3 includes a cross-sectional view (3A) and a top view (3B) schematically showing an example of a mold used in an optical resin wafer manufacturing method according to the present embodiment 1.
[FIG. 4] FIG. 4 includes a cross-sectional view (4A) and a top view (4B) schematically showing an example of a mold used in an optical resin wafer manufacturing method according to the present embodiment 1.
[FIG. 5] FIG. 5 is a cross-sectional view schematically showing an example of a mold used in the optical resin wafer manufacturing method according to the present embodiment 2.
[FIG. 6] FIG. 6 is a cross-sectional view schematically showing an example of an optical resin wafer obtained by the optical resin wafer manufacturing method according to the present embodiment 2.
[FIG. 7] FIG. 7 is a schematic diagram showing an example of an optical member manufacturing method of the present embodiment.
[FIG. 8] FIG. 8 is a schematic diagram showing an example of the optical member manufacturing method of the present embodiment.
[FIG. 9] FIG. 9 is a schematic diagram showing an example of an optical information transmission device using an optical member of the present embodiment.

### DESCRIPTION OF EMBODIMENTS

Hereinafter, embodiments of the present invention will be described.

### 1. Optical Resin Wafer Manufacturing Method

The optical resin wafer manufacturing method according to the present embodiment includes a mold preparation step of preparing a mold satisfying the following (a) or the following (b), and a curing step of casting a curable composition, which is a raw material of the optical resin wafer according to the present embodiment, into the mold according to the present embodiment and curing the curable composition to obtain an optical resin wafer precursor.
(a) The mold according to the present embodiment includes one or more spacers in a central portion of a cavity space.
(b) A relationship between a thickness tₘ₀ of a central portion of a cavity space of the mold according to the present embodiment and a thickness tₘ₁ of a point 5 mm from an outer peripheral portion of the cavity space of the mold according to the present embodiment toward the central portion is tₘ₀ > tₘ₁.

Hereinafter, the optical resin wafer manufacturing method will be described with reference to Embodiments 1 and 2.

### 1-1. Embodiment 1

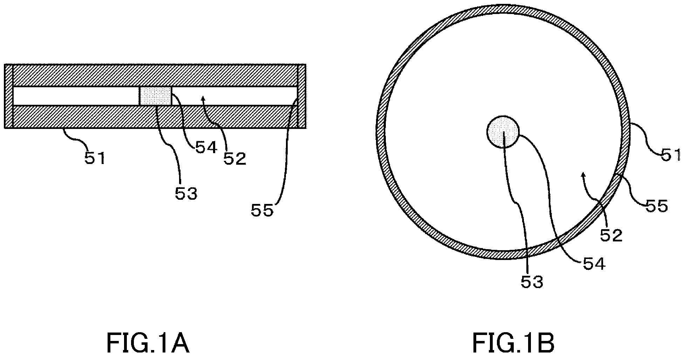

FIG. 1 is a cross-sectional view (1A) and a top view (1B) schematically showing an example of a mold used in the optical resin wafer manufacturing method according to embodiment 1.

The optical resin wafer manufacturing method according to the present embodiment 1 (hereinafter, may be abbreviated as "present embodiment 1") includes a mold preparation step of preparing a mold 51 satisfying the following (a) (hereinafter, may be abbreviated as "mold preparation step"), and a curing step of casting a curable composition serving as a raw material of the optical resin wafer into the mold 51 and curing the curable composition to obtain an optical resin wafer precursor (hereinafter, may be abbreviated as "curing step").
(a) The mold 51 includes one or more spacers in a central portion of a cavity space.

The mold 51 is, for example, a glass mold and has a cylindrical cavity space 52. In addition, for example, one cylindrical spacer 54 made of glass is disposed in a central portion 53 of the cavity space 52.

The present inventors have confirmed that, in a case where a curable composition, which is a raw material of an optical resin wafer, is subjected to casting molding, curing shrinkage occurs, a central portion or the like of a cured product is recessed, and there is a problem that it is difficult to ensure the planarity of the obtained optical resin wafer. Further, the present inventors have found that, by disposing one or more spacers in a central portion of a cavity space of a mold, the recess of the central portion of the cured product is suppressed, and it is easy to ensure the planarity of the optical resin wafer. It is considered that the recess of the central portion of the cured product is caused by the composition being attracted to the central portion due to the curing shrinkage, but it is considered that the recess is suppressed by the presence of the spacer in the central portion.

In the present embodiment 1, the spacer 54 is disposed in the cavity space 52, and the mold 51 is prepared to be usable in the curing step. It is noted that, in the mold preparation step, even in a case where a specific work is not performed, the mold can be regarded as being prepared as long as the mold can be used in the curing step.

For example, a resin casting channel (not shown) is provided in the prepared mold 51, and a curable composition containing an isocyanate compound, a polythiol compound, and the like, which is a raw material of the optical resin wafer, is injected from the resin casting channel. Then, for example, the curable composition is thermally cured by heating, and the optical resin wafer precursor made of a (thio)urethane-based optical resin is taken out from the mold.

For example, burr processing of removing a "burr" remaining on an outer periphery and notch processing of forming a notch at an edge portion of the obtained optical resin wafer precursor are performed on the obtained optical resin wafer precursor, and an optical resin wafer made of a (thio)urethane-based optical resin is obtained.

In the present embodiment 1, the mold 51 preferably has one or more spacers within a range of 25 mm from an edge portion 55 of the cavity space 52 toward the central portion 53. By using such a mold, it is easier to ensure the planarity of the optical resin wafer. It is noted that the spacer 54 disposed within the range of 25 mm from the edge portion of the cavity space toward the central portion can also be used for forming a notch, and the obtained notch can function as a mark for indicating the orientation of the optical resin wafer.

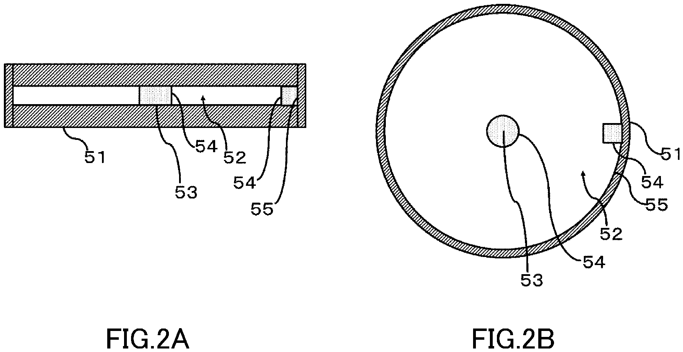

FIG. 2 is a cross-sectional view (2A) and a top view (2B) schematically showing another example of the mold used in the present embodiment 1. In FIG. 2, in the mold 51, one spacer 54 is disposed in the central portion 53 of the cavity space 52, and one spacer 54 is disposed within the range of 25 mm from the edge portion 55 of the cavity space 52 toward the central portion 53. The mold of the present embodiment 1 may be a mold in which the spacer is disposed in this manner. By using such a mold, it is easier to ensure the planarity of the optical resin wafer. It is noted that the spacer 54 disposed within the range of 25 mm from the edge portion of the cavity space toward the central portion can also be used for forming a notch, and the obtained notch can function as a mark for indicating the orientation of the optical resin wafer.

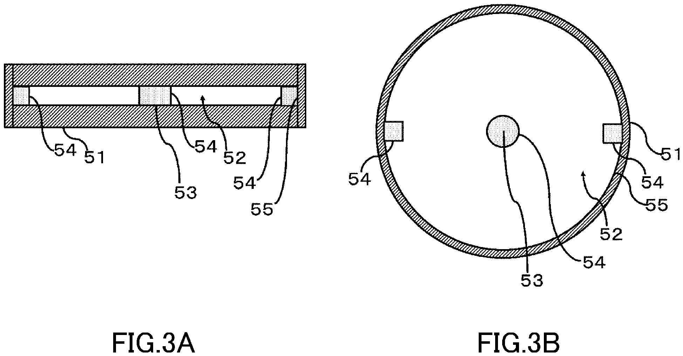

FIG. 3 is a cross-sectional view (3A) and a top view (3B) schematically showing another example of the mold used in the present embodiment 1. In FIG. 3, in the mold 51, one spacer 54 is disposed in the central portion 53 of the cavity space 52, and two spacers 54 are disposed at positions symmetrical with respect to the central portion 53 within the range of 25 mm from the edge portion 55 of the cavity space 52 toward the central portion 53. The mold of the present embodiment 1 may be a mold in which the spacer is disposed in this manner. The mold of the present embodiment 1 may preferably have two or more spacers, more preferably have four or more spacers, still more preferably have six or more spacers, and particularly preferably have eight or more spacers. By using such a mold, it is easier to ensure the planarity of the optical resin wafer.

It is noted that the spacer 54 (preferably the spacer 54 at the edge portion 55 of the cavity space) may have a structure that allows the curable composition to be cast into the cavity space 52. As a result, the spacer also serves as the resin casting channel, and it is not necessary to separately provide the resin casting channel, which makes it easier to reduce the manufacturing cost.

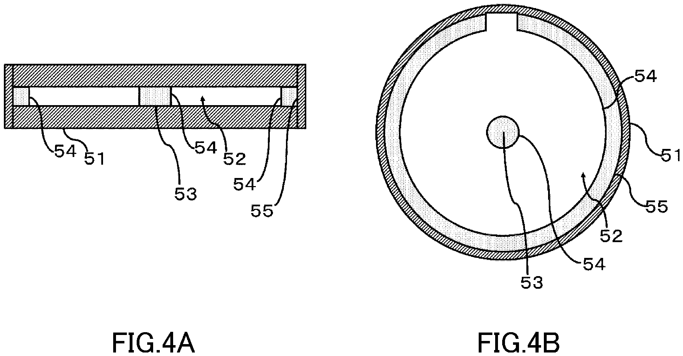

FIG. 4 is a cross-sectional view (4A) and a top view (4B) schematically showing another example of the mold used in the present embodiment 1. In FIG. 4, in the mold 51, one spacer 54 is disposed in the central portion 53 of the cavity space 52, and a cylindrical (annular in a plan view) spacer 54 is disposed to occupy 80% or more of the outer periphery of the cavity space 52. The mold of the present embodiment 1 may be a mold in which the spacer is disposed in this manner. The mold of the present embodiment 1 may preferably have a spacer that occupies 85% or more of the outer periphery, and more preferably have a spacer that occupies 90% or more of the outer periphery. By using such a mold, it is easier to ensure the planarity of the optical resin wafer. It is noted that the outer periphery of the mold of the present embodiment means a range within 25 mm from the edge portion 5 of the cavity space 52 of the mold 51 toward the central portion 53.

The shape of the spacer used in the present embodiment 1 may be, for example, a cylindrical shape, a polygonal columnar shape, a cylindrical shape, or an rectangular tubular shape. From the viewpoint of easily releasing, a cylinder is preferable. It is noted that the spacer 54 located at the edge portion 55 of the cavity space of the mold 51 in FIG. 4 has a cylindrical (annular in a top view) shape.

A linear expansion coefficient aₘ of the mold manufactured in the present embodiment is preferably 0.1 × 10⁻⁶/°C or more, more preferably 0.5 × 10⁻⁶/°C or more, even more preferably 1 × 10⁻⁶/°C or more, still more preferably 2 × 10⁻⁶/°C or more, and even still more preferably 3 × 10⁻⁶/°C or more, and is preferably 100 × 10⁻⁶/°C or less, more preferably 50 × 10⁻⁶/°C or less, even more preferably 40 × 10⁻⁶/°C or less, still more preferably 30 × 10⁻⁶/°C or less, even still more preferably 20 × 10⁻⁶/°C or less, and even further still preferably 15 × 10⁻⁶/°C or less. As a result, the planarity of the optical resin wafer can be further improved. aₘ is measured under conditions of a temperature rising rate of 5 °C/min from 25°C to 150°C according to Japanese Industrial Standards JIS K-7197:2012.

From the viewpoint of setting the linear expansion coefficient aₘ within an appropriate range, the material of the mold used in the present embodiment 1 may be, for example, a metal material (9 to 20 × 10⁻⁶/°C) such as SUS, copper, silver, or iron, a glass material (9 to 20 × 10⁻⁶/°C) such as soda-lime glass or blue sheet glass, an inorganic material (3 to 8 × 10⁻⁶/°C) such as borosilicate glass, alumina, or single-crystal sapphire, or quartz (0.5 × 10⁻⁶/°C), and is preferably a metal, a glass, or an inorganic material, and more preferably a glass.

The material of the spacer used in the present embodiment 1 is not particularly limited, but the linear expansion coefficient aₛ of the spacer of the present embodiment is preferably 0.1 × 10⁻⁶/°C or more, more preferably 0.5 × 10⁻⁶/°C or more, even more preferably 1 × 10⁻⁶/°C or more, still more preferably 2 × 10⁻⁶/°C or more, and even still more preferably 3 × 10⁻⁶/°C or more, and is preferably 500 × 10⁻⁶/°C or less, more preferably 400 × 10⁻⁶/°C or less, even more preferably 200 × 10⁻⁶/°C or less, still more preferably 80 × 10⁻⁶/°C or less, even still more preferably 65 × 10⁻⁶/°C or less, and even further still more preferably 20 × 10⁻⁶/°C or less. As a result, the planarity of the optical resin wafer can be further improved. aₛ is measured under conditions of a temperature rising rate of 5 °C/min from 25°C to 150°C according to Japanese Industrial Standards JIS K-7197:2012.

From the viewpoint of setting the linear expansion coefficient aₛ within an appropriate range, the material of the spacer of the present embodiment may be, for example, an elastomer (60 to 400 × 10⁻⁶/°C) such as silicon, styrene, chloroprene, or nitrile, an engineering plastic material (50 to 80 × 10⁻⁶/°C) such as LDPE (100 to 400 × 10⁻⁶/°C), polycarbonate, PET, or nylon, a metal material (9 to 20 × 10⁻⁶/°C) such as SUS, copper, silver, or iron, a glass (9 to 20 × 10⁻⁶/°C) such as soda-lime glass or blue sheet glass, an inorganic material (3 to 8 × 10⁻⁶/°C) such as borosilicate glass, alumina, or single-crystal sapphire, or quartz (0.5 × 10⁻⁶/°C), and is preferably a metal, a glass, or an inorganic material.

In addition, from the viewpoint of setting the linear expansion coefficient aₛ within an appropriate range and the viewpoint of ease of processing the spacer, the material of the spacer of the present embodiment preferably includes at least one or more selected from the group consisting of glass, ceramic, metal, and resin, and particularly preferably includes glass.

From the viewpoint of improving the optical characteristics, the material of the optical resin wafer manufactured in the present embodiment preferably includes at least one selected from the group consisting of a (thio)urethane-based optical resin, an epoxy-based optical resin, a polycarbonate-based optical resin, an episulfide-based optical resin, an allyl carbonate-based optical resin (preferably a diallyl carbonate-based optical resin), a nylon-based optical resin, a polyamide-based optical resin, and a polyimide-based optical resin, more preferably includes a (thio)urethane-based optical resin, and particularly preferably includes a thiourethane resin.

The components of the curable composition used in the present embodiment 1 are appropriately selected according to the material of the target optical resin wafer, but in a case where the material of the target optical resin wafer is a (thio)urethane-based optical resin, the components can be obtained by polycondensing an isothiocyanate compound and a bi- or higher functional active hydrogen compound (for example, a polythiol compound, a polyol compound, or the like).

Examples of the isothiocyanate compound used in the curable composition of the present embodiment 1 include hexamethylene diisocyanate, pentamethylene diisocyanate, xylylene diisocyanate, isophorone diisocyanate, bis(isocyanatomethyl)cyclohexane, bis(isocyanatocyclohexyl)methane, 2,5-bis(isocyanatomethyl)bicyclo-[2.2.1]-heptane, 2,6-bis(isocyanatomethyl)bicyclo-[2.2.1]-heptane, toluene diisocyanate, phenylene diisocyanate, and 4,4'-diphenylmethane diisocyanate.

Specific examples of the polythiol compound used in the curable composition of the present embodiment 1 include pentaerythritol tetrakis(2-mercaptoacetate), pentaerythritol tetrakis(3-mercaptopropionate), bis(2-mercaptoethyl)sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio)propane, 4,6-bis(mercaptomethylthio)-1,3-dithiane, 2-(2,2-bis(mercaptomethylthio)ethyl)-1,3-dithiethane, ethylene glycol bis(3-mercaptopropionate), and the like.

Examples of the polyol compound used in the curable composition of the present embodiment 1 include linear or branched aliphatic alcohols such as ethylene glycol, diethylene glycol, triethylene glycol, propylene glycol, dipropylene glycol, tripropylene glycol, 1,3-propanediol, 2,2-dimethyl-1,3-propanediol, 2,2-diethyl-1,3-propanediol, 1,2-butanediol, 1,3-butanediol, 1,4-butanediol, 3-methyl-1,3-butanediol, 1,2-pentanediol, 1,3-pentanediol, 1,5-pentanediol, 2,4-pentanediol, 2-methyl-2,4-pentanediol, 3-methyl-1,5-pentanediol, 1,6-hexanediol, 2,5-hexanediol, glycerol, diglycerol, polyglycerol, trimethylolpropane, pentaerythritol, and di(trimethylolpropane); and alicyclic alcohols such as 1,2-cyclopentanediol, 1,3-cyclopentanediol, 3-methyl-1,2-cyclopentanediol, 1,2-cyclohexanediol, 1,3-cyclohexanediol, 1,4-cyclohexanediol, 4,4'-bicyclohexanol, and 1,4-cyclohexanedimethanol.

The curing conditions in the curing step of the present embodiment 1 should be appropriately selected according to the material of the target optical resin wafer, but from the viewpoint of suppressing thermal runaway or convection due to reaction heat, when the glass transition temperature (Tg) of the optical resin, which is a raw material of the optical resin wafer, is used as a reference, the curing temperature is preferably the glass transition temperature (Tg) + 10°C or higher, more preferably the glass transition temperature (Tg) + 15°C or higher, and still more preferably the glass transition temperature (Tg) + 20°C or higher, and is preferably the glass transition temperature (Tg) + 40°C or lower, more preferably the glass transition temperature (Tg) + 35°C or lower, and still more preferably the glass transition temperature (Tg) + 30°C or lower.

In addition, specific examples of the curing temperature include 110°C to 140°C.

From the viewpoint of suppressing thermal runaway or convection due to reaction heat, the temperature rising time in the curing step of the present embodiment 1 is preferably 1 hour or more, more preferably 1.1 hours or more, still more preferably 1.2 hours or more, even still more preferably 1.8 hours or more, even still more preferably 1.9 hours or more, and even still more preferably 2 hours or more.

In a case where the amount of the optical resin is large, the temperature rising time may be 12 hours or longer, 14 hours or longer, 16 hours or longer, 20 hours or longer, 22 hours or longer, or 24 hours or longer.

In a case where the amount of the optical resin is further large, the temperature rising time may be 24 hours or longer, 26 hours or longer, 28 hours or longer, 44 hours or longer, 46 hours or longer, or 48 hours or longer.

From the viewpoint of suppressing thermal runaway or convection due to reaction heat, the holding time of the curing temperature in the curing step of the present embodiment 1 is preferably 1 hour or more, more preferably **1.1** hours or more, even more preferably **1.2** hours or more, still more preferably **1.8** hours or more, even still more preferably **1.9** hours or more, and even further still more preferably 2 hours or more.

From the viewpoint of reducing unreacted substances, the cooling time in the curing step of the present embodiment 1 is preferably 1 hour or more, more preferably 1.1 hours or more, even more preferably 1.2 hours or more, still more preferably 1.8 hours or more, even still more preferably 1.9 hours or more, and even further still more preferably 2 hours or more.

In a case where the amount of the optical resin is large, the temperature decreasing time may be 12 hours or longer, 14 hours or longer, 16 hours or longer, 20 hours or longer, 22 hours or longer, or 24 hours or longer.

In a case where the amount of the optical resin is further large, the temperature decreasing time may be 24 hours or longer, 26 hours or longer, 28 hours or longer, 44 hours or longer, 46 hours or longer, or 48 hours or longer.

The present embodiment 1 preferably includes a processing step of performing at least one processing selected from the group consisting of notch processing, burr processing, beveling processing, cutting processing, grinding processing, polishing processing, and heat treatment on the optical resin wafer precursor to obtain an optical resin wafer.

The notch processing is processing of forming a notch, and in the optical resin wafer, the notch serves as a mark indicating the orientation. A device, conditions, and the like used for the notch processing are not particularly limited, and the processing can be performed by appropriately adopting known devices, conditions, and the like.

The burr processing is a step of removing burrs (irregularities) such as protrusions generated on the outer periphery of the optical resin wafer precursor. A device, conditions, and the like used for the burr processing are not particularly limited, and the processing can be performed by appropriately adopting known devices, conditions, and the like.

The beveling processing is a step of scraping off the corners of the outer periphery of the optical resin wafer precursor and rolling (chamfering) the optical resin wafer precursor in the thickness direction. A device, conditions, and the like used for the beveling processing are not particularly limited, and the processing can be performed by appropriately adopting known devices, conditions, and the like.

The cutting processing is a step of cutting the optical resin wafer precursor in order to obtain an optical resin wafer having a target thickness. A device, conditions, and the like used for the cutting processing are not particularly limited, and the processing can be performed by appropriately adopting known devices such as a wire saw and a blade saw.

The grinding processing is a step of grinding the surface of the optical resin wafer precursor to ensure flatness and the like. In addition, the polishing processing is a step of polishing the surface of the optical resin wafer precursor to ensure flatness and the like. The methods, conditions, and the like of the grinding processing and the polishing processing are not particularly limited, and for example, the methods described in paragraphs 0047 to 0062 of WO2020/170801 can be appropriately adopted.

The heat treatment is a step of heating a cured product for the purpose of relaxing the internal stress of the optical resin wafer precursor. By heating, the movement of the molecules constituting the optical resin wafer precursor is activated, and the distortion of the optical resin wafer precursor is removed, whereby the optical resin wafer can be flattened.

From the viewpoint of further flattening the optical resin wafer, the heating temperature in the heat treatment is preferably 60°C or higher, more preferably 70°C or higher, still more preferably 80°C or higher, even still more preferably 90°C or higher, and even still more preferably 100°C or higher, and when the glass transition temperature (Tg) of the optical resin which is a raw material of the optical resin wafer is used as a reference, the heating temperature is preferably Tg - 20°C or higher, more preferably Tg - 10°C or higher, still more preferably Tg or higher, even still more preferably Tg + 10°C or higher, even still more preferably Tg + 20°C or higher, even still more preferably Tg + 30°C or higher, even still more preferably Tg + 40°C or higher, and even still more preferably Tg + 50°C or higher, and when the thermal deterioration of the optical resin wafer is within an allowable range, the heating temperature may be, for example, 200°C or lower. In a case of determining the heat treatment temperature, the temperature dependence of the storage elastic modulus and the loss elastic modulus may be referred to by viscoelasticity measurement. In the heat treatment, from the viewpoint of further suppressing warping, the pressurization may be further performed. Specifically, the optical resin wafer according to the present embodiment may be pressurized by sandwiching the optical resin wafer between flat plates and pressing.

The average thickness of the optical resin wafer manufactured in the present embodiment 1 can be appropriately adjusted according to the use of the optical resin wafer, but is preferably 0.1 mm or more, more preferably 0.2 mm or more, and still more preferably 0.3 mm or more, and is preferably 3.0 mm or less, more preferably 2.0 mm or less, and still more preferably 1.0 mm or less. The average thickness of the optical resin wafer manufactured in the present embodiment 1 is an arithmetic average of the thickness at a point 5 mm from the edge portion of the hole of the optical resin wafer toward the outer peripheral portion and the thickness at a point 5 mm from the outer peripheral portion of the optical resin wafer toward the central portion.

The diameter of the optical resin wafer manufactured in the present embodiment 1 can be appropriately adjusted according to the use of the optical resin wafer, but from the viewpoint of acquiring a larger number of optical members from one optical resin wafer, the diameter is preferably 50 mm or more, more preferably 70 mm or more, still more preferably 80 mm or more, even still more preferably 100 mm or more, even still more preferably 120 mm or more, and even still more preferably 140 mm or more, and may be, for example, 350 mm or less.

Here, as the diameter of the optical resin wafer increases, the force with which the resin composition is attracted to the central portion in the cavity space of the mold due to the curing shrinkage of the resin composition increases, and the planarity of the optical resin wafer is likely to decrease. However, according to the present embodiment 1, the planarity can be improved even in a case where the diameter of the optical resin wafer is equal to or larger than the above-described lower limit value.

The optical resin wafer manufactured in the present embodiment 1 may be required to improve flatness and smoothness and reduce thickness variation due to the use as a material for an optical product. The difference (PV) between the maximum and minimum values of the measurement or WARP may be simply used as an index for reducing the thickness variation. The preferable ranges of Bow, which is an index of flatness/planarity/tabularity of the optical resin wafer manufactured in the present embodiment 1, TTV, which is an index of thickness variation, and surface roughness Ra, which is an index of smoothness, are, for example, as follows.

The flatness/planarity/tabularity of the optical resin wafer manufactured in the present embodiment 1 is preferably 350 µm or less, more preferably 300 µm or less, still more preferably 250 µm or less, even still more preferably 200 µm or less, even still more preferably 150 µm or less, even still more preferably 100 µm or less, even still more preferably 50 µm or less, even still more preferably 40 µm or less, and even still more preferably 30 µm or less, and may be, for example, 0.01 µm or more, 0.1 µm or more, 1 µm or more, or 10 µm or more.

The flatness/planarity/tabularity of the optical resin wafer manufactured in the present embodiment 1 is Bow of the optical resin wafer, and can be measured by an ultra-high-precision three-dimensional measuring machine. For example, the measurement can be performed under the following conditions. In the present embodiment 1, Bow is an amount representing the distance from the reference surface at the center of the wafer when the wafer is held in a natural state without being vacuum-sucked.
Device: UA3P (manufactured by Panasonic Production Engineering Co., Ltd.)
Measurement region: circular region of ±30 mm in each of X and Y directions from the center of the optical resin wafer

In addition, the difference (PV) between the maximum and minimum values of the measurement or WARP may be simply used as an index.

The thickness variation TTV of the optical resin wafer manufactured in the present embodiment 1 is preferably 10 µm or less, more preferably 5 µm or less, still more preferably 2 µm or less, and even still more preferably 1 µm or less, and the lower limit value of the thickness variation TTV is not particularly limited, but is, for example, 0.01 µm or more, or may be 0.1 µm or more. In the present embodiment, TTV is the difference between the maximum value and the minimum value of the thickness (distance from the back surface reference plane) when the wafer is adsorptively fixed.

The surface roughness Ra of the optical resin wafer manufactured in the present embodiment 1 is preferably 10 nm or less, more preferably 5 nm or less, still more preferably 2 nm or less, and even still more preferably 1 nm or less, and the lower limit value of the surface roughness Ra is not particularly limited, but is, for example, 0.01 nm or more, or may be 0.1 nm or more. The surface roughness Ra of the optical resin wafer can be determined by measurement in accordance with Japanese Industrial Standards JIS B 0601:2013.

From the viewpoint of being able to reduce the thickness of the optical resin wafer while improving the optical characteristics of the optical resin wafer, the refractive index of the optical resin wafer manufactured in the present embodiment 1 is preferably 1.47 or more, more preferably 1.49 or more, still more preferably 1.51 or more, and even still more preferably 1.53 or more, and may be, for example, 1.90 or less, for example, 1.80 or less, or for example, 1.70 or less. The refractive index of the optical resin wafer can be determined by measurement in accordance with Japanese Industrial Standards JIS K-0062:1992 at a temperature of 25°C and a wavelength of 587.6 nm.

From the viewpoint of being able to further flatten the optical resin wafer, in the optical resin wafer manufactured in the present embodiment 1, the curing shrinkage rate A calculated by the following expression (x) is preferably 15% or less, more preferably 10% or less, and still more preferably 5% or less. The curing shrinkage rate A of the optical resin wafer can be determined by measurement in accordance with Japanese Industrial Standards JIS K-6941-2-4:2014. $A = \left({V}_{0}-{V}_{1}\right) / {V}_{0} \times 100$
A: curing shrinkage rate [%]
V₀: volume of curable composition (before curing)
V₁: volume of optical resin wafer precursor (after curing)

A linear expansion coefficient a_{w} of the optical resin wafer manufactured in the present embodiment 1 is preferably 10 × 10⁻⁶/°C or more, more preferably 20 × 10⁻⁶/°C or more, still more preferably 30 × 10⁻⁶/°C or more, and even more preferably 40 × 10⁻⁶/°C or more, and is preferably 250 × 10⁻⁶/°C or less, more preferably 200 × 10⁻⁶/°C or less, still more preferably 150 × 10⁻⁶/°C or less, even more preferably 100 × 10⁻⁶/°C or less, and even still more preferably 80 × 10⁻⁶/°C or less. As a result, the planarity of the optical resin wafer can be further improved. a_{w} is measured under conditions of a temperature rising rate of 5 °C/min from 25°C to 150°C according to Japanese Industrial Standards JIS K-7197:2012.

The optical resin wafer manufactured in the present embodiment 1 can be used, for example, in an optical information transmission device. Examples of the optical information transmission device include a wearable display that displays virtual reality (VR), augmented reality (AR), and the like.

In a case where the optical resin wafer manufactured in the present embodiment 1 is used in an optical information transmission device, the improvement of the planarity and smoothness of the optical resin wafer and the reduction of the thickness variation are further required as compared with a case where the optical resin wafer is used for other applications. As described above, according to the present embodiment **1,** it is possible to obtain a wafer in which the planarity and smoothness are improved and the thickness variation is reduced, and thus the optical resin wafer obtained by the present embodiment 1 is suitable for the application to the optical information transmission device.

### 1-2. Embodiment 2

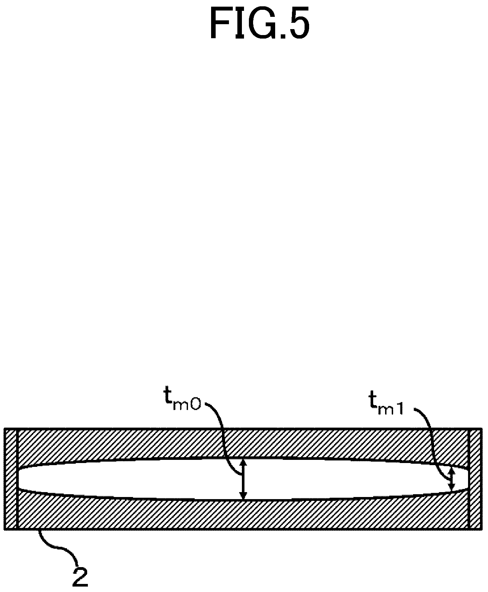

FIG. 5 is a cross-sectional view schematically showing an example of a mold used in an optical resin wafer manufacturing method according to the present embodiment 2.

An optical resin wafer manufacturing method according to the present embodiment 2 (hereinafter, may be abbreviated as "the present embodiment 2") includes a mold preparation step (hereinafter, may be abbreviated as "mold preparation step") of preparing a mold 2 satisfying the following (b), and a curing step (hereinafter, may be abbreviated as "curing step") of casting a curable composition serving as a raw material of the optical resin wafer into the mold 2 and curing the curable composition to obtain an optical resin wafer precursor. A thickness tₘ₀ of a central portion of a cavity space is larger than a thickness tₘ₁ of a point 5 mm from an outer peripheral portion of the cavity space toward the central portion, and the mold 2 is a mold satisfying the following (b). In other words, the mold 2 has a concave surface on which a molding surface of the mold is concave toward an outside of the mold.

(b) A relationship between the thickness tₘ₀ of the central portion of the cavity space of the mold 2 and the thickness tₘ₁ of the point 5 mm from the outer peripheral portion of the cavity space of the mold 2 toward the central portion is tₘ₀ > tₘ₁.

The mold 2 is a mold made of glass, and has, for example, a cylindrical cavity space.

As described above, the present inventors have confirmed that, in a case where the curable composition serving as a raw material of the optical resin wafer is cast and molded, curing shrinkage occurs, a central portion or the like of a cured product is recessed, and there is a problem in that it is difficult to ensure the planarity of the obtained optical resin wafer. The present inventors have found that, by making the thickness of the central portion of the cavity space larger than the thickness of the point 5 mm from the outer peripheral portion of the cavity space toward the central portion, the recess of the central portion of the cured product is suppressed, and thus it is easy to ensure the planarity of the optical resin wafer.

In the present embodiment 2, for example, the mold 2 in which the molding surface of the mold is a curved surface such that the thickness of the cavity space increases toward the central portion from the outer peripheral portion of the cavity space is prepared.

The prepared mold 2 is provided with, for example, a resin casting channel (not shown), and the curable composition serving as a raw material of the optical resin wafer is injected from the resin casting channel. The curable composition is thermally cured by heating, and the optical resin wafer precursor is taken out from the mold.

The obtained optical resin wafer precursor is subjected to, for example, burr processing of removing "burr" remaining on the outer periphery, notch processing of forming a notch at an edge portion of the optical resin wafer precursor, polishing processing of polishing the surface of the optical resin wafer precursor, and heating processing of heating the optical resin wafer precursor, and an optical resin wafer is obtained.

In the mold used in the present embodiment 2, it is preferable that the thickness tₘ₀ of the central portion of the cavity space and the thickness tₘ₁ of the point 5 mm from the outer peripheral portion of the cavity space toward the central portion satisfy a relationship of 0.80X ≤ tₘ₀ - tₘ₁ ≤ 1.20X. X is a numerical value calculated by the following expression (2). The present inventors have modeled the amount of deflection occurring in the optical resin wafer and have examined the quantification of the amount of recess occurring in the central portion of the optical resin wafer, and have found that the amount of recess occurring in the central portion of the optical resin wafer accurately matches X calculated by the following expression (2). The present inventors have found that, by adopting a mold in which the thickness of the central portion or the like of the mold satisfies 0.80X ≤ tₘ₀ - tₘ₁ ≤ 1.20X in accordance with the material or the like of the target optical resin wafer, the recess occurring in the optical resin wafer is offset, and thus it is easy to ensure the planarity of the optical resin wafer.
[Expression 1] $X = \frac{3 \left(5+ν\right) \left(1-ν\right) {R}^{4} ρ}{16 {{Et}_{m 1}}^{3}}$ (2)
*v*: Poisson's ratio of the mold
R: radius of the cavity space of the mold
ρ: force generated with curing shrinkage of the curable composition and applied to the molding surface of the mold
E: Young's modulus of the mold

In the mold used in the present embodiment 2, tₘ₀ - tₘ₁, which is a relationship between the thickness tₘ₀ of the central portion of the cavity space and the thickness tₘ₁ of the point 5 mm from the outer peripheral portion of the cavity space toward the central portion, is preferably 0.80X or more, more preferably 0.85X or more, still more preferably 0.90X or more, and even still more preferably 0.95X or more, and is preferably 1.20X or less, more preferably 1.15X or less, still more preferably 1.10X or less, and even still more preferably 1.05X or less, and is preferably 0.80X or more and 1.20X or less, more preferably 0.85X or more and 1.15X or less, still more preferably 0.90X or more and 1.10X or less, and even still more preferably 0.95X or more and 1.05X or less. As a result, the planarity of the optical resin wafer can be further improved.

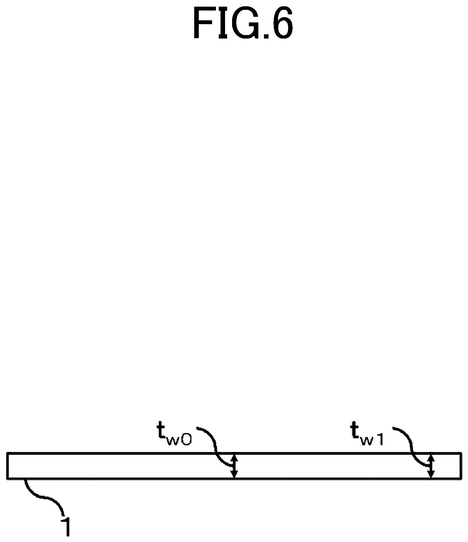

The type, the dimension, and the like of the curved surface of the molding surface of the mold used in the present embodiment 2 are not particularly limited, and for example, the molding surface can be a spherical surface. In a case where the molding surface of the mold used in the present embodiment 2 is a spherical surface, the curvature of the molding surface is preferably a curvature such that the thickness t_{w0} of the central portion of the optical resin wafer to be manufactured and the thickness t_{w1} of the point 5 mm from the outer peripheral portion of the optical resin wafer to be manufactured toward the central portion satisfy a relationship of 0.80 ≤ t_{w1}/t_{w0} ≤ 1.20. FIG. 6 is a cross-sectional view schematically showing an example of the optical resin wafer obtained by the optical resin wafer manufacturing method according to the present embodiment 2, and the thickness t_{w0} of the central portion of the optical resin wafer and the thickness t_{w1} of the point 5 mm from the outer peripheral portion of the optical resin wafer toward the central portion satisfy a relationship of 0.80 ≤ t_{w1}/t_{w0} ≤ 1.20.

In a case where the molding surface of the mold used in the present embodiment 2 is a spherical surface, the curvature of the molding surface is preferably a curvature such that a relationship of 0.80 ≤ t_{w1}/t_{w0} is satisfied, more preferably a curvature such that a relationship of 0.85 ≤ t_{w1}/t_{w0} is satisfied, still more preferably a curvature such that a relationship of 0.90 ≤ t_{w1}/t_{w0} is satisfied, particularly preferably a curvature such that a relationship of 0.95 ≤ t_{w1}/t_{w0} is satisfied, and most preferably a curvature such that a relationship of 0.98 ≤ t_{w1}/t_{w0} is satisfied. In addition, the curvature of the molding surface of the mold is preferably a curvature such that a relationship of t_{w1}/t_{w0} ≤ 1.15 is satisfied, more preferably a curvature such that a relationship of t_{w1}/t_{w0} ≤ 1.10 is satisfied, still more preferably a curvature such that a relationship of t_{w1}/t_{w0} ≤ 1.05 is satisfied, particularly preferably a curvature such that a relationship of t_{w1}/t_{w0} ≤ 1.02 is satisfied, and most preferably a curvature such that t_{w1}/t_{w0} is 1.00.

The material of the mold used in the present embodiment 2, the material of the optical resin wafer to be manufactured in the present embodiment 2, the curing conditions in the curing step of the present embodiment 2, the type of processing in the processing step of the present embodiment 2, the optical resin wafer to be manufactured in the present embodiment 2, and the like are the same as those of the present embodiment 1.

### 2. Optical Resin Wafer

Hereinafter, the optical resin wafer according to the present embodiment will be described.

The optical resin wafer according to the present embodiment is obtained by the optical resin wafer manufacturing method according to the present embodiment 1 and the optical resin wafer manufacturing method according to the present embodiment 2.

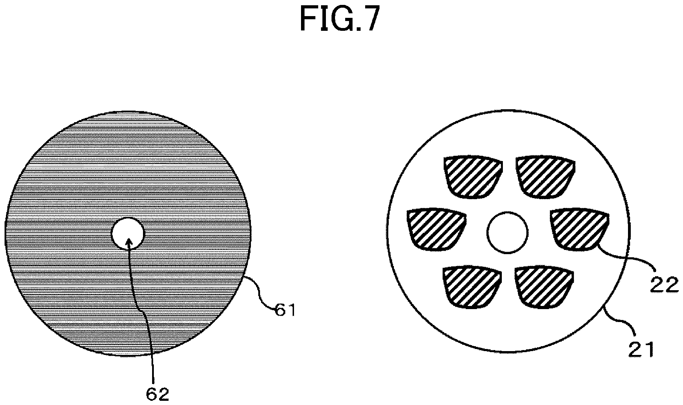

The optical resin wafer to be manufactured by the present embodiment 1 is, for example, an optical resin wafer 61 containing a thiourethane-based resin, and has a hole 62 in the central portion of the optical resin wafer 61. The left view of FIG. 7 is a top view schematically showing an example of the optical resin wafer according to the present embodiment.

The preferred ranges of the average thickness and the diameter of the optical resin wafer according to the present embodiment are as described above.

In the optical resin wafer according to the present embodiment, from the use application as a material used for an optical product, there may be a case where improvement of flatness and smoothness and reduction of thickness variation are required. The optical resin wafer according to the present embodiment is required to have the above-described characteristics. The preferred ranges of the flatness, the TTV which is an index of the thickness variation, and the surface roughness Ra which is an index of the smoothness are as described above.

The refractive index, the curing shrinkage rate, the coefficient of linear expansion, and the use application of the optical resin wafer according to the present embodiment are as described above.

### 3. Optical Member Manufacturing Method

Hereinafter, the optical member manufacturing method according to the present embodiment will be described.

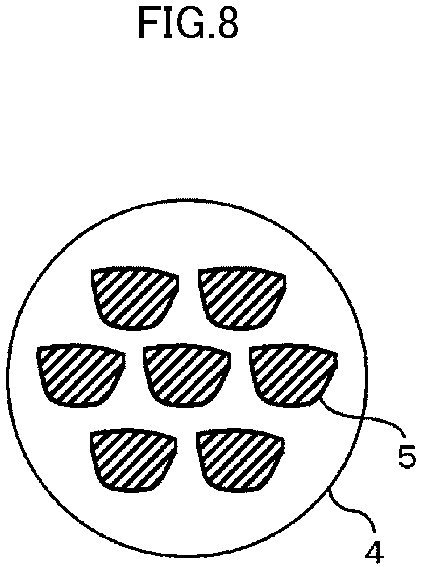

The right view of FIG. 7 is a view schematically showing an example of the optical member manufacturing method according to the present embodiment. The optical member manufacturing method according to the present embodiment includes a step of obtaining a plurality of optical members 22 from the optical resin wafer 21 according to the present embodiment. The optical member 22 according to the present embodiment may be, for example, an optical lens, a light guide plate, a filter, or an optical switch. FIG. 8 is a schematic diagram showing another example of the method for manufacturing an optical member of the present embodiment. The optical member manufacturing method according to the present embodiment includes a step of obtaining a plurality of optical members 5 from the optical resin wafer 4 according to the present embodiment. The optical member 5 according to the present embodiment may be, for example, an optical lens, a light guide plate, a filter, or an optical switch.

### 4. Optical Member

Hereinafter, the optical member according to the present embodiment will be described.

The optical member according to the present embodiment is obtained by the optical member manufacturing method according to the present embodiment.

The optical member according to the present embodiment can be used, for example, in an optical information transmission device. The optical information transmission device is as described above.

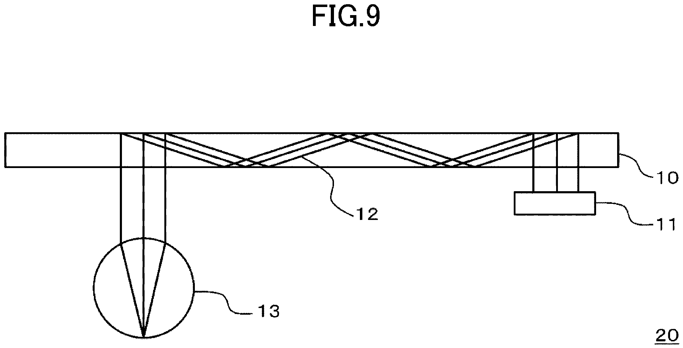

An optical information transmission device using the optical member of the present embodiment will be described with reference to FIG. 9. The optical information transmission device 20 includes the light irradiation unit 11 and the optical member 10 according to the present embodiment. The light 12 generated from the light irradiation unit 11 is reflected by the optical member 10 according to the present embodiment, and the reflected light is emitted to the eyes 13 of the user. As a result, the light emitted from the light irradiation unit 11 is recognized by the user wearing the optical information transmission device 20.

### 5. Mold for Manufacturing Optical Resin Wafer

Hereinafter, the mold for manufacturing an optical resin wafer according to the present embodiment will be described.

The mold for manufacturing an optical resin wafer according to the present embodiment is a mold for manufacturing an optical resin wafer, in which one or two or more spacers are disposed in a central portion of the mold for manufacturing an optical resin wafer according to the present embodiment.

The mold for manufacturing an optical resin wafer according to the present embodiment is preferably provided with a resin casting channel used for injecting an optical resin composition. As a result, the spacer also serves as the resin casting channel, and it is not necessary to separately provide the resin casting channel, and the manufacturing efficiency can be further improved.

Preferred aspects of the mold for manufacturing an optical resin wafer according to the present embodiment and the spacer of the mold for manufacturing an optical resin wafer according to the present embodiment are the same as the preferred aspects of the mold used in the optical resin wafer manufacturing method according to the present embodiment described above, and thus the description thereof will be omitted here.

Although the embodiments of the present invention have been described above, these are merely examples of the present invention, and various configurations other than the above can be adopted. In addition, the present invention is not limited to the embodiments described above and modifications, improvements, and the like are included in the present invention in a range in which it is possible to achieve the object of the present invention.

This application claims priority based on Japanese Patent Application No. 2023-221784 and Japanese Patent Application No. 2023-221798 filed on December 27, 2023, the entire disclosures of which are incorporated herein by reference.

The present invention may also take the following aspects.
[1] An optical resin wafer manufacturing method, the method including a step A of casting an optical resin composition into a mold and curing the optical resin composition to obtain an optical resin wafer, in which the mold includes a molding surface that is a curved surface, and the curved surface has a curvature such that a value of t_{w1}/t_{w0}, which is a ratio of a thickness t_{w1} of a point 5 mm from an outer peripheral portion toward a central portion of the optical resin wafer to a thickness t_{w0} of the central portion of the optical resin wafer, is 0.80 or more and 1.20 or less.
[2] The optical resin wafer manufacturing method according to [1], in which, in a case where a thickness of a central portion in a cavity space of the mold is denoted by tₘ₀ and a thickness of a point 5 mm from an outer peripheral portion toward the central portion in the cavity space of the mold is denoted by tₘ₁, the following expression (1) is satisfied. ${t}_{m 0} > {t}_{m 1}$ (1)
[3] The optical resin wafer manufacturing method according to [1] or [2], in which the optical resin wafer contains one or two or more selected from the group consisting of a (thio)urethane-based optical resin, an epoxy-based optical resin, a polycarbonate-based optical resin, an episulfide-based optical resin, an allyl carbonate-based optical resin, a nylon-based optical resin, a polyamide-based optical resin, and a polyimide-based optical resin.
[4] The optical resin wafer manufacturing method according to [1] or [2], in which an average thickness of the optical resin wafer is 0.1 mm or more and 3.0 mm or less.
[5] The optical resin wafer manufacturing method according to [1] or [2], in which a diameter of the optical resin wafer is 50 mm or more and 350 mm or less.
[6] The optical resin wafer manufacturing method according to [1] or [2], in which a flatness of the optical resin wafer is 350 µm or less.
[7] The optical resin wafer manufacturing method according to [1] or [2], in which a refractive index of the optical resin wafer at a temperature of 25°C and a wavelength of 587.6 nm in accordance with JIS K-0062:1992 is 1.47 or more.
[8] The optical resin wafer manufacturing method according to [1] or [2], in which the mold contains glass.
[9] The optical resin wafer manufacturing method according to [1] or [2], further including a step B of polishing the optical resin wafer taken out from the mold.
[10] The optical resin wafer manufacturing method according to [1] or [2], further including a step C of flattening the optical resin wafer by heating.
[11] A mold for manufacturing an optical resin wafer, in which the mold for manufacturing an optical resin wafer includes a molding surface that is a curved surface, and the curved surface has a curvature such that a value of t_{w1}/t_{w0}, which is a ratio of a thickness t_{w1} of a point 5 mm from an outer peripheral portion toward a central portion of the optical resin wafer to a thickness t_{w0} of the central portion of the optical resin wafer, is 0.80 or more and 1.20 or less.
[12] The mold for manufacturing an optical resin wafer according to [11], in which, in a case where a thickness of a central portion in a cavity space of the mold for manufacturing an optical resin wafer is denoted by tₘ₀ and a thickness of a point 5 mm from an outer peripheral portion toward a central portion in the cavity space of the mold for manufacturing an optical resin wafer is denoted by tₘ₁, the following expression (1) is satisfied. ${t}_{m 0} > {t}_{m 1}$ (1)

The present invention may also take the following aspects.
<1> An optical resin wafer manufacturing method, the method including: a step A of casting an optical resin composition into a mold and curing the optical resin composition to obtain an optical resin wafer, in which one or two or more spacers are disposed in a central portion of a cavity space of the mold.
<2> The optical resin wafer manufacturing method according to <1>, in which the one or two or more spacers are disposed within a range of 25 mm from an edge portion toward the central portion of the cavity space of the mold.
<3> The optical resin wafer manufacturing method according to <2>, in which the spacer is disposed in 80% or more of an outer periphery of the mold.
<4> The optical resin wafer manufacturing method according to <1> or <2>, in which a shape of the spacer is a columnar shape, a polygonal prism shape, or a ring shape.
<5> The optical resin wafer manufacturing method according to <1> or <2>, in which, in the step A, the optical resin composition is cast from a resin casting channel provided in the spacer.
<6> The optical resin wafer manufacturing method according to <1> or <2>, in which the optical resin wafer contains one or two or more selected from the group consisting of a (thio)urethane-based optical resin, an epoxy-based optical resin, a polycarbonate-based optical resin, an episulfide-based optical resin, an allyl carbonate-based optical resin, a nylon-based optical resin, a polyamide-based optical resin, and a polyimide-based optical resin.
<7> The optical resin wafer manufacturing method according to <1> or <2>, in which an average thickness of the optical resin wafer is 0.1 mm or more and 3.0 mm or less.
<8> The optical resin wafer manufacturing method according to <1> or <2>, in which a diameter of the optical resin wafer is 50 mm or more and 350 mm or less.
<9> The optical resin wafer manufacturing method according to <1> or <2>, in which a flatness of the optical resin wafer is 350 µm or less.
<10> The optical resin wafer manufacturing method according to <1> or <2>, in which a refractive index of the optical resin wafer at a temperature of 25°C and a wavelength of 587.6 nm in accordance with JIS K-0062:1992 is 1.47 or more.
<11> The optical resin wafer manufacturing method according to <1> or <2>, in which a curing shrinkage rate obtained by the following expression (1) from a volume V₀ of the optical resin composition before curing and a volume V₁ of the optical resin composition after curing, which are measured according to JIS K-6941-2-4: 2014, is 15% or less. $Curing shrinkage rate \left(%\right) = \left({V}_{1}-{V}_{0}\right) / {V}_{0}$ (1)
<12> The optical resin wafer manufacturing method according to <1> or <2>, in which the spacer contains one or two or more selected from the group consisting of glass, ceramic, metal, and resin.
<13> An optical resin wafer containing a thiourethane resin, the optical resin wafer having a hole in the center thereof.
<14> A mold for manufacturing an optical resin wafer, in which one or two or more spacers are disposed in a central portion of the mold for manufacturing an optical resin wafer.

### REFERENCE SIGNS LIST

1 optical resin wafer
2 mold
4 optical resin wafer
5 optical member
10 optical member
11 light irradiation unit
12 light
13 eyes
20 optical information transmission device
21 optical resin wafer
22 optical member
51 mold
52 cavity space
53 central portion of cavity space
54 spacer
55 edge portion of cavity space
61 optical resin wafer
62 hole
t_{w0} thickness of central portion of optical resin wafer 1
t_{w1} thickness of point 5 mm from outer peripheral portion of optical resin wafer 1 toward central portion
tₘ₀ thickness of central portion in cavity space of mold 2
tₘ₁ thickness of point 5 mm from outer peripheral portion of mold 2 toward central portion in cavity space

## Claims

1. An optical resin wafer manufacturing method, the method comprising:
a mold preparation step of preparing a mold satisfying the following (a) or (b); and
a curing step of casting a curable composition serving as a raw material of an optical resin wafer into the mold and curing the curable composition to obtain an optical resin wafer precursor,
wherein (a) the mold includes one or more spacers in a central portion of a cavity space, and
(b) a relationship between a thickness tₘ₀ at the central portion of the cavity space of the mold and a thickness tₘ₁ at a point 5 mm from an outer peripheral portion of the cavity space of the mold toward the central portion satisfies tₘ₀ > tₘ₁.

2. The optical resin wafer manufacturing method according to Claim 1, further comprising:
a processing step of performing, on the optical resin wafer precursor, at least one processing selected from the group consisting of notch processing, burr processing, beveling processing, cutting processing, grinding processing, polishing processing, and heat treatment to obtain the optical resin wafer.

3. The optical resin wafer manufacturing method according to Claim 1,
wherein the mold satisfies the (a) and includes the one or more spacers within a range of 25 mm from an edge portion of the cavity space toward the central portion.

4. The optical resin wafer manufacturing method according to Claim 3,
wherein the mold satisfies the (a), and
the spacers are disposed to occupy 80% or more of an outer periphery of the cavity space.

5. The optical resin wafer manufacturing method according to Claim 1,
wherein the mold satisfies the (a), and
a shape of the spacer is a cylindrical shape, a polygonal columnar shape, a cylindrical shape, or an rectangular tubular shape.

6. The optical resin wafer manufacturing method according to Claim 1,
wherein the mold satisfies the (a), and
the spacer has a structure that allows the curable composition to be cast into the cavity space.

7. The optical resin wafer manufacturing method according to Claim 1,
wherein the mold satisfies the (a), and
the spacer contains at least one selected from the group consisting of glass, ceramic, metal, and resin.

8. The optical resin wafer manufacturing method according to Claim 1,
wherein the mold contains glass.

9. The optical resin wafer manufacturing method according to Claim 1,
wherein the optical resin wafer contains at least one selected from the group consisting of a (thio)urethane-based optical resin, an epoxy-based optical resin, a polycarbonate-based optical resin, an episulfide-based optical resin, an allyl carbonate-based optical resin, a nylon-based optical resin, a polyamide-based optical resin, and a polyimide-based optical resin.

10. The optical resin wafer manufacturing method according to Claim 1,
wherein a refractive index of the optical resin wafer is 1.47 or more.

11. The optical resin wafer manufacturing method according to Claim 1,
wherein a curing shrinkage rate A of the curable composition, which is calculated by the following expression (x), is 15% or less, $A = \left({V}_{0}-{V}_{1}\right) / {V}_{0} \times 100$
A: curing shrinkage rate [%],
V₀: volume of the curable composition (before curing), and
V₁: volume of the optical resin wafer precursor (after curing) .

12. The optical resin wafer manufacturing method according to Claim 1,
wherein an average thickness of the optical resin wafer is 0.1 mm or more and 3.0 mm or less.

13. The optical resin wafer manufacturing method according to Claim 1,
wherein a diameter of the optical resin wafer is 50 mm or more and 350 mm or less.

14. The optical resin wafer manufacturing method according to Claim 1,
wherein a flatness of the optical resin wafer is 350 µm or less.
